# EUROPÄISCHE PATENTSCHRIFT

(11) **EP 1 568 930 B1**
(45) Veröffentlichungstag und Bekanntmachung des Hinweises auf die Patenterteilung: **06.09.2006**
(21) Anmeldenummer: 05000957.0
(22) Anmeldetag: 19.01.2005
(51) Int. Cl.: F16L 21/06, F16L 33/04

(54) **Schelle**
Clamp
Collier de serrage

(30) Priorität: 28.02.2004 DE 102004009808
(43) Veröffentlichungstag der Anmeldung: 31.08.2005
(73) Patentinhaber: Rasmussen GmbH, 63477 Maintal (DE)
(72) Erfinder: Krämer, Markus, 63533 Mainhausen (DE); Barbett, Wolfgang, 46414 Rhede (DE); Henrich, Detlef, 63694 Limeshain (DE)
(74) Vertreter: Knoblauch, Andreas

(56) Entgegenhaltungen:
- WO-A-02/086370
- DE-A1- 10 217 750
- DE-C1- 19 822 915

## Beschreibung

Die Erfindung betrifft eine Schelle mit einem Schellenband, das an seinen Enden geschlossene Schlaufen aufweist, die jeweils ein weitgehend zylindrisches Gelenkteil teilweise umgeben, und mit mindestens einer durch Schlitze in den Schlaufen sowie durch ein gewindefreies Loch in dem einen Gelenkteil hindurchgeführten Spannschraube, die mit ihrem Kopf beim Spannen an dem einen Gelenkteil drehbar anliegt und in ein mit Gewinde versehenes Loch in dem anderen Gelenkteil eingreift.

Die Schelle kann als Rohrkupplung zum Verbinden zweier Rohre verwendet werden, aber auch als Schlauchschelle dienen.

Bei einer bekannten Schelle dieser Art (DE 37 10 852 C1) sind die Gelenkteile als massive Bolzen ausgebildet. Die Schelle hat an jedem Ende ihres Schellenbandes zwei Schlaufen. In jeder Schlaufe ist ein Gelenkbolzen drehbar gelagert. Die Gelenkbolzen in den Schlaufen jedes Schellenbandendes sind durch eine Platte verbunden. Diese Ausbildung des Verschlusses der Schelle ist aufwendig.

Ferner ist es bekannt, die Gelenkteile als Hülsen auszubilden (DE 37 29 372 C2). Die Hülsen sind in ihrer Wand mit durchgehenden Löchern versehen, wobei sich die Spannschraube mit ihrem Kopf am Rand des Loches der einen Hülse abstützt und mit einer Mutter versehen ist, die sich am Rand eines Loches in der anderen Hülse abstützt. Bei dieser Ausbildung ist zusätzlich eine Mutter erforderlich, und bei hohen Spannkräften besteht die Gefahr, daß die Gelenkhülsen durch den Spannschraubenkopf und/oder die Mutter verformt werden.

Eine Schelle gemäß dem Oberbegriff des Anspruchs 1 ist aus Dokument DE 19822915 bekannt.

Der Erfindung liegt die Aufgabe zugrunde, eine Schelle der eingangs genannten Art anzugeben, bei der weniger Einzelteile erforderlich sind und die Gelenkteile weiterhin hohen Spannkräften standhalten.

Erfindungsgemäß ist diese Aufgabe dadurch gelöst, daß die Gelenkteile als Hülsen ausgebildet und am Umfang ihrer sich diametral gegenüberliegenden Löcher radial zu ihrer Längsmittelachse hin zu einem Doppelloch zusammengedrückt sind.

Bei dieser Ausbildung stützen sich die Lochränder bei jedem Gelenkteil aneinander ab. Die Gelenkteile halten daher im Bereich ihrer Löcher hohen Spannkräften ohne Verformung stand. Die Ausbildung der Gelenkteile als Hülsen ist auf einfache Weise durch Rundbiegen eines Bleches möglich. Dennoch kommt man weiterhin ohne eine Mutter aus.

Vorzugsweise ist dafür gesorgt, daß die Ränder des oder jedes mit Gewinde versehenen Doppellochs koaxial nach innen zur Längsmittelachse des einen Gelenkteils hin bis zur gegenseitigen Anlage durchgezogen sind, so daß sich ein quer durch das eine Gelenkteil erstreckendes Doppelloch ergibt, das länger als die zweifache Wandstärke des einen Gelenkteils ist. Diese Ausbildung hat den Vorteil, daß das Gewinde in dem oder jedem Doppelloch über eine größere Länge mit entsprechend mehr Windungen für den Eingriff der Spannschraube versehen werden kann, als wenn das Gewinde nur über eine Länge entsprechend der doppelten Wandstärke in den Lochrändern eines Doppellochs ausgebildet wäre.

Sodann ist es vorteilhaft, wenn das Gewinde in dem oder jedem Doppelloch des einen Gelenkteils gerollt ist. Prinzipiell ist es zwar möglich, das jeweilige Gewinde mit einem Gewindeschneider zu schneiden. Dagegen hat das Rollen den Vorteil, daß das Gewinde nicht geschnitten, sondern kaltgeformt wird. Dadurch erhöht sich die Belastbarkeit des Gewindes.

Sodann kann dafür gesorgt sein, daß bei Ausbildung der Gelenkteile mit zwei Doppellöchern in dem mit Gewinde versehenen Gelenkteil zwischen den Doppellöchern eine in der Außenseite dieses Gelenkteils sich in Umfangsrichtung des Gelenkteils erstreckende Vertiefung für den Eingriff eines Vorsprungs auf der Innenseite eines dieses Gelenkteil zwischen den Doppellöchern teilweise umgebenden Schlaufenteils des Schellenbands ausgebildet ist. Sobald hierbei Kerbe und Vorsprung beim Zusammenbau der Schelle ineinandergreifen, kann das betreffende Gelenkteil nicht von selbst aus den Schlaufen herausfallen, bevor der Verschluß geschlossen ist.

Vorzugsweise ist eine zweite Vertiefung diametral in bezug auf die Längsmittelachse des mit Gewinde versehenen Gelenkteils gegenüber der ersten Vertiefung ausgebildet. Die Gelenkteile können dann wahlweise in einer von zwei um 180° zueinander versetzten Drehwinkellagen in die Schlaufen eingeführt werden.

Wenn die Vertiefungen in die Wand des Gelenkteils, ähnlich wie Sicken, eingedrückte Kerben sind, wird die Wandstärke dadurch nicht verringert.

Auch der Vorsprung kann durch Eindrücken des Schlaufenteils auf seiner dem Vorsprung abgewandten Seite gebildet sein.

Die Erfindung und ihre Weiterbildungen werden nachstehend anhand der beigefügten Zeichnung eines bevorzugten Ausführungsbeispiels einer erfindungsgemäßen Schelle näher beschrieben. Darin stellen dar:
- Fig. 1: eine perspektivische Ansicht des Ausführungsbeispiels einer Schellegemäß dem Stand der Technik
- Fig. 2: einen Axialschnitt durch ein erstes Gelenkteil einer erfindungsgemäßen Schelle,
- Fig. 3: eine Seitenansicht des Gelenkteils nach Fig. 2,

- Fig. 4: eine Axialansicht des Gelenkteils nach Fig. 2,
- Fig. 5: eine gegenüber Fig. 3 um 90° gedrehte Ansicht des Gelenkteils nach Fig. 2,
- Fig. 6: eine gegenüber Fig. 5 um 90° gedrehte Ansicht des Gelenkteils nach Fig. 2,
- Fig. 7: eine gegenüber Fig. 6 um 90° gedrehte Ansicht des Gelenkteils nach Fig. 2,
- Fig. 8: einen Querschnitt durch die Mitte des Gelenkteils nach Fig. 2,
- Fig. 9: einen Axialschnitt durch ein zweites Gelenkteil der Schelle nach Fig. 1,
- Fig. 10: eine Axialansicht des Gelenkteils nach Fig. 9,
- Fig. 11: eine Draufsicht auf das Gelenkteil nach Fig. 9,.
- Fig. 12: eine gegenüber Fig. 11 um 90° gedrehte Seitenansicht des Gelenkteils nach Fig. 9,
- Fig. 13: eine gegenüber Fig. 12 um 90° gedrehte Ansicht des Gelenkteils nach Fig. 9,
- Fig. 14: einen vergrößerten Ausschnitt der Ansicht nach Fig. 9,

- Fig. 15: den Schnitt XV-XV durch die eine Schlaufe der Schelle und das darin eingesetzte Gelenkteil und
- Fig. 16: einen Querschnitt durch die axiale Mitte der einen Schlaufe und das darin eingesetzte Gelenkteil.

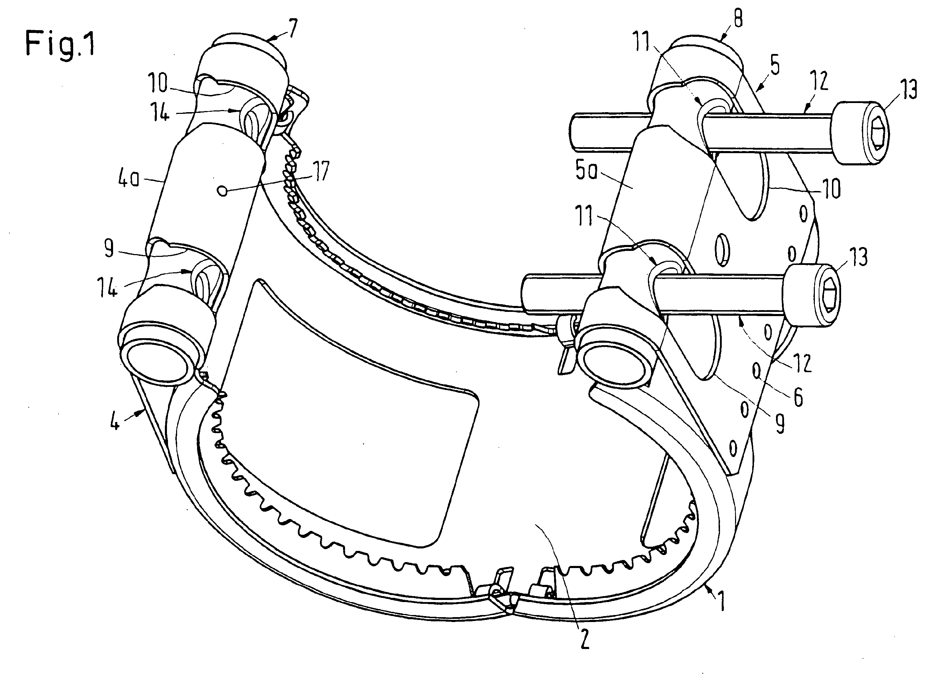

Die Schelle nach Fig. 1 besitzt ein Schellenband 1 aus zwei durch ein biegsames Gelenk 2 verbundenen Hälften. Die Endabschnitte des Schellenbands 1 sind zu geschlossenen Schlaufen 4 und 5 umgebogen und mit der Außenseite des Schellenbands 1 durch Punktschweißungen 6 verbunden. Dabei umgeben die Schlaufen 4 und 5 jeweils ein weitgehend zylindrisches Gelenkteil 7 und 8 teilweise. Durch zwei Schlitze 9, 10 in jeder Schlaufe 4, 5 sowie durch gewindefreie Löcher 11 in dem einen Gelenkteil 8 hindurchgeführte Spannschrauben 12 liegen mit ihrem Kopf 13 beim Spannen an dem einen Gelenkteil 8 drehbar an und greifen in mit Gewinde versehene Löcher 14 in dem anderen Gelenkteil 7 ein.

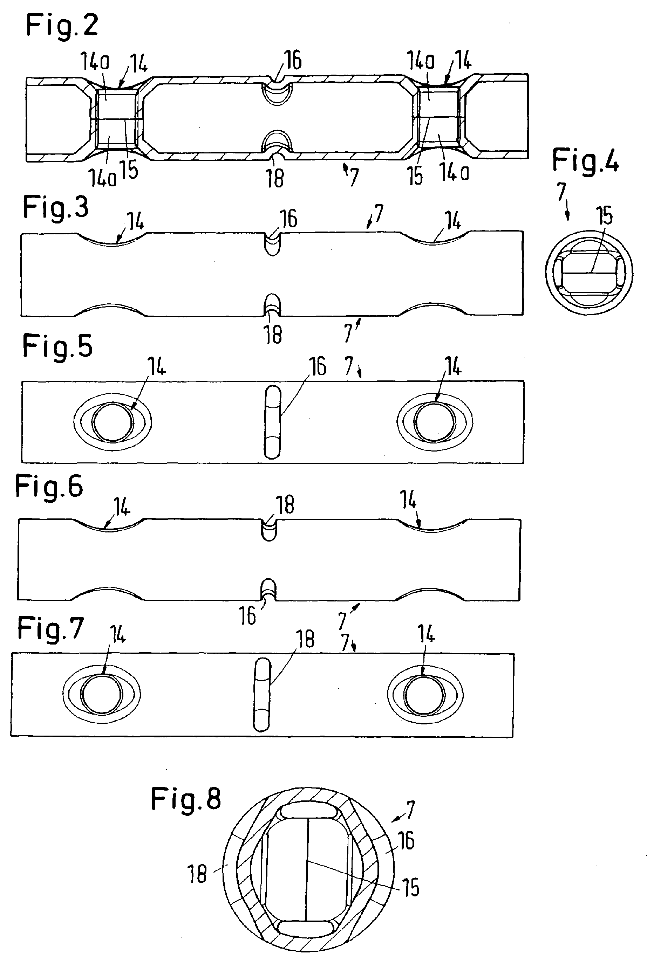

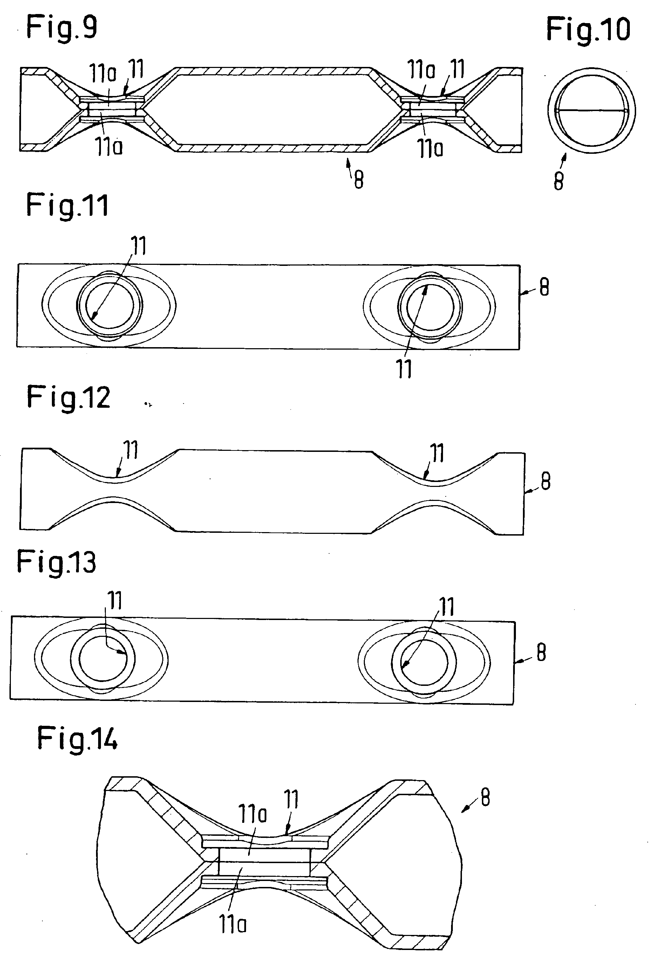

Wie die Fig. 2 bis 16 zeigen, sind die Gelenkteile 7, 8 als Hülsen ausgebildet und am Umfang ihrer sich diametral gegenüberliegenden Löcher 11a, 14a radial zu ihrer Längsmittelachse hin zu einem Doppelloch 11, 14 zusammengedrückt. Im Bereich der Löcher beziehungsweise Doppellöcher 11, 14 sind die Gelenkteile daher durch höhere Spannkräfte der Spannschrauben 12 belastbar, als wenn die Löcher 11a beziehungsweise 14a nicht aneinander anliegen würden, zum Beispiel nur im Umfangswandbereich der Gelenkteile 7, 8 lägen.

Die Ränder 15 jedes mit Gewinde versehenen Doppellochs 14 sind koaxial nach innen zur Längsmittelachse des Gelenkteils 7 hin bis zur gegenseitigen Anlage durchgezogen, so daß sich ein quer durch das Gelenkteil 7 erstreckendes Doppelloch 14 ergibt, das länger als die zweifache Wandstärke des Gelenkteils 7 ist. Dadurch ist es möglich, das Gewinde im Doppelloch 14 durch sehr viel mehr Gewindegänge als bei Löchern 14a auszubilden, die nur in der Umfangswand des Gelenkteils 7 ausgebildet wären.

Die Gewinde in den Doppellöchern 14 des Gelenkteils 7 sind eingerollt und nicht eingeschnitten, also kaltverformt. Die Gewinde halten daher höheren Spannkräften stand.

In dem Gelenkteil 7 ist zwischen den Doppellöchern 14 eine in der Außenseite dieses Gelenkteils 7 sich in Umfangsrichtung des Gelenkteils 7 erstreckende Vertiefung 16 für den Eingriff eines Vorsprungs 17 auf der Innenseite eines das Gelenkteil 7 zwischen den Doppellöchern 14 teilweise umgebenden Schlaufenteils 4a des Schellenbands 1 ausgebildet. Dadurch wird verhindert, daß das Gelenkteil 7 aus der Schlaufe 4 herausfallen kann, bevor die Spannschrauben 12 in die Löcher 14 eingeschraubt worden sind.

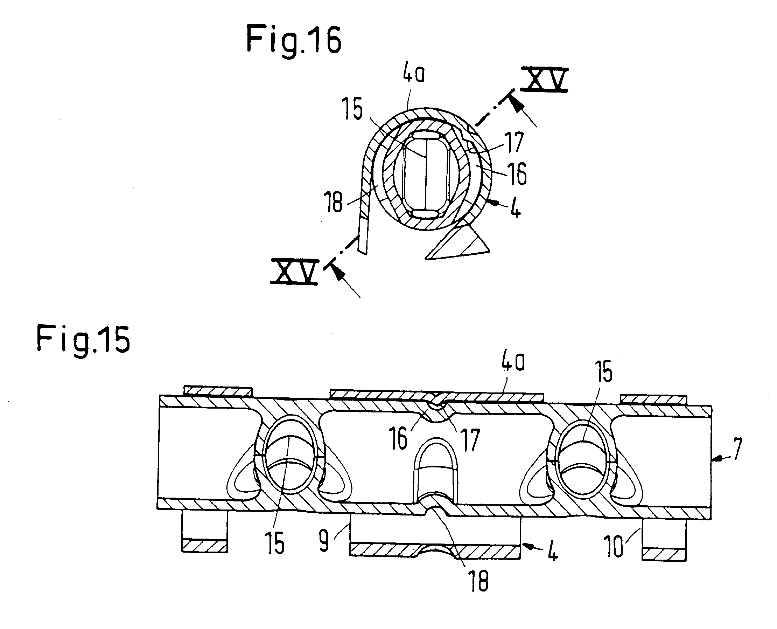

Diametral in bezug auf die Mittelachse des mit Gewinde versehenen Gelenkteils 7 gegenüber der Vertiefung 16 ist eine zweite Vertiefung 18 ausgebildet. Der Vorsprung 17 kann dann statt in die Vertiefung 16 auch in die Vertiefung 18 eingreifen, wenn das Gelenkteil 7 um 180° gegenüber der in den Fig. 15 und 16 dargestellten Lage verdreht in der Schlaufe 4 eingeführt worden ist. Das Gelenkteil 7 ist daher weitgehend lageunabhängig in der Schlaufe 4 montierbar.

Die Vertiefungen 16 und 18 sind in die Wand des Gelenkteils 7 eingedrückte Kerben. Dadurch wird der Wandquerschnitt, im Gegensatz zu einer eingeschnittenen Kerbe, kaum geschwächt. Da sich die Vertiefungen 16, 18 in Umfangsrichtung des Gelenkteils 7 erstrecken, läßt sich das Gelenkteil 7 weiterhin, trotz des in eine der Vertiefungen 16 und 18 eingreifenden Vorsprungs 17 (Fig. 15), in seiner Schlaufe 4, ebenso wie das Gelenkteil 8 in seiner Schlaufe 5, verdrehen, wenn die Spannschrauben 12 in die Löcher 11 und 14 eingeführt und festgezogen sind.

Der Vorsprung 17 ist durch Eindrücken des Schlaufenteils 4a auf seiner dem Vorsprung 17 abgewandten Seite ausgebildet. Auch dieser Vorsprung schwächt mithin nicht die Wandstärke des Schlaufenteils 4a und ist - ähnlich einer Sicke - verhältnismäßig steif.

Im Gelenkteil 8 kann auf Vertiefungen, entsprechend den Vertiefungen 16 und 18, und im Schlaufenteil 5a der Schlaufe 5 auf einen dem Vorsprung 17 entsprechenden Vorsprung verzichtet werden, weil das Gelenkteil 8 durch die Spannschrauben 12 gegen ein Herausfallen aus der Schlaufe 5 gesichert ist, sobald die Schrauben 12 in die Löcher 11 eingeführt sind, wobei die Schrauben 12 auch auf ihrem aus dem jeweiligen Loch 11 herausragenden Gewindeabschnitt mit einem (nicht dargestellten) dünnen Gummiring selbst gegen ein Herausfallen aus den Löchern 11 gesichert sein können.

Statt bei der dargestellten Schelle ist die Erfindung auch bei Schellen anwendbar, die nur eine Spannschraube und dementsprechend in dem jeweiligen Gelenkteil nur ein durchgehendes Loch wie das Loch 11 beziehungsweise ein mit Gewinde versehenes Loch, wie das Loch 14, aufweisen, und dementsprechend mit nur zwei Schlaufenteilen an jedem Schellenbandende versehen sind.

## Patentansprüche

1. Schelle mit einem Schellenband (1), das an seinen Enden geschlossene Schlaufen (4, 5) aufweist, die jeweils ein weitgehend zylindrisches Gelenkteil (7, 8) teilweise umgeben, und mit mindestens einer durch Schlitze (9, 10) in den Schlaufen (4, 5) sowie durch ein gewindefreies Loch (11) in dem einen Gelenkteil (8) hindurchgeführten Spannschraube (12), die mit ihrem Kopf (13) beim Spannen an dem einen Gelenkteil (8) drehbar anliegt und in ein mit Gewinde versehenes Loch (14) in dem anderen Gelenkteil (7) eingreift, wobei die Gelenkteile (7, 8) als Hülsen ausgebildet sind, **dadurch gekennzeichnet, daß** die Gelenkteile am Umfang ihrer sich diametral gegenüberliegenden Löcher (11a; 14a) radial zu ihrer Längsmittelachse hin zu einem Doppelloch (11; 14) zusammengedrückt sind.

2. Schelle nach Anspruch 1, **dadurch gekennzeichnet, daß** die Ränder (15) des oder jedes mit Gewinde versehenen Doppellochs (14) koaxial nach innen zur Längsmittelachse des einen Gelenkteils (7) hin bis zur gegenseitigen Anlage durchgezogen sind, so daß sich ein quer durch das eine Gelenkteil (7) erstreckendes Doppelloch (14) ergibt, das länger als die zweifache Wandstärke des einen Gelenkteils (7) ist.

3. Schelle nach Anspruch 2, **dadurch gekennzeichnet, daß** das Gewinde in dem oder jedem Doppelloch (14) des einen Gelenkteils (7) gerollt ist.

4. Schelle nach einem der Ansprüche 1 bis 3, **dadurch gekennzeichnet, daß** bei Ausbildung der Gelenkteile (7, 8) mit zwei Doppellöchern in dem mit Gewinde versehenen Gelenkteil (7) zwischen den Doppellöchern (14) eine in der Außenseite dieses Gelenkteils (7) sich in Umfangsrichtung des Gelenkteils (7) erstreckende Vertiefung (16) für den Eingriff eines Vorsprungs (17) auf der Innenseite eines dieses Gelenkteil (7) zwischen den Doppellöchern (14) teilweise umgebenden Schlaufenteils (4a) des Schellenbands (1) ausgebildet ist.

5. Schelle nach Anspruch 4, **dadurch gekennzeichnet, daß**, eine zweite Vertiefung (18) diametral in bezug auf die Längsmittelachse des mit Gewinde versehenen Gelenkteils (7) gegenüber der ersten Vertiefung (16) ausgebildet ist.

6. Schelle nach Anspruch 5, **dadurch gekennzeichnet, daß** die Vertiefungen (16, 18) in die Wand des Gelenkteils (7) eingedrückte Kerben sind.

7. Schelle nach einem der Ansprüche 4 bis 6, **dadurch gekennzeichnet, daß** der Vorsprung (17) durch Eindrücken des Schlaufenteils (4a) auf seiner dem Vorsprung (17) abgewandten Seite gebildet ist.

## Claims

1. Clamping collar having a collar band (1) which at its ends possesses closed loops (4, 5) which each partially surround a largely cylindrical joint part (7, 8) and having at least one tightening bolt (12) passing through slots (9, 10) in the loops (4, 5) as well as through an unthreaded hole (11) in one joint part (8) which bolt rests rotatably by its head (13) against the one joint part (8) during tightening and engages in a threaded hole (14) in the other joint part (7), wherein the joint parts (7, 8) are constructed in the form of sleeves, **characterised in that** at the perimeter of their diametrically opposite holes (11a; 14a) the joint parts are compressed radially towards their central longitudinal axis to form a double hole (11; 14).

2. Clamping collar according to claim 1, **characterised in that** the edges (15) of the or each threaded double hole (14) are drawn through coaxially inwards towards the central longitudinal axis of the one joint part (7) until mutual contact so that a double hole (14) extending transversely through the one joint part (7) is obtained which is longer than twice the wall thickness of the one joint part (7).

3. Clamping collar according to claim 2, **characterised in that** the thread in the or each double hole (14) of the one joint part (7) is rolled.

4. Clamping collar according to any of claims 1 to 3, **characterised in that** in constructing the joint parts (7, 8) with two double holes in the threaded joint part (7), between the double holes (14) an indentation (16) in the outside of this joint part (7) extending in the circumferential direction of the joint part (7) is constructed for the engagement of a projection (17) on the inside of a loop part (4a) of the collar band (1) partially surrounding this joint part (7) between the double holes (14) .

5. Clamping collar according to claim 4, **characterised in that** a second indentation (18) is constructed diametrically, with respect to the central longitudinal axis of the threaded joint part (7), opposite the first indentation (16).

6. Clamping collar according to claim 5, **characterised in that** the indentations (16, 18) are notches impressed into the wall of the joint part (7).

7. Clamping collar according to any of claims 4 to 6, **characterised in that** the projection (17) is formed by indenting the loop part (4a) on its side facing away from the projection (17).

## Revendications

1. Collier de serrage, comprenant une bande de collier (1) qui présente à ses extrémités des boucles fermées (4, 5), lesquelles entourent respectivement partiellement une pièce d'articulation (7, 8) largement cylindrique, et comprenant au moins une vis de serrage (12) passée à travers des fentes (9, 10) dans les boucles (4, 5) ainsi qu'à travers un trou (11) dépourvu de pas de vis dans l'une des pièces d'articulation (8), ladite vis étant appliquée lors du serrage avec sa tête (13) contre l'une des pièces d'articulation (8) avec faculté de rotation et étant engagée dans un trou (14) pourvu d'un taraudage dans l'autre pièce d'articulation (7), dans lequel les pièces d'articulation (7, 8) sont réalisées sous forme de douilles, **caractérisé en ce que** les pièces d'articulation sont écrasées au niveau de la périphérie de leurs trous (11a ; 14a) diamétralement opposées en direction radiale vers leur axe médian longitudinal pour former un double trou (11 ; 14).

2. Collier de serrage selon la revendication 1, **caractérisé en ce que** les bordures (15) du ou de chaque double trou (14) doté d'un taraudage sont tirées coaxialement vers l'intérieur en direction de l'axe médian longitudinal de l'une des pièces d'articulation (7) jusqu'à venir en contact mutuel, de sorte qu'il en résulte un double trou (14) qui s'étend transversalement à travers l'une des pièces d'articulation (7) qui est plus long que le double de l'épaisseur de l'une des pièces d'articulation (7).

3. Collier de serrage selon la revendication 2, **caractérisé en ce que** le taraudage dans le ou dans chaque double trou (14) de l'une des pièces d'articulation (7) est réalisé par galetage.

4. Collier de serrage selon l'une des revendications 1 à 3, **caractérisé en ce que** dans une réalisation des pièces d'articulation (7, 8) avec deux doubles trous dans la pièce d'articulation (7) pourvue de taraudages, un renfoncement (16) s'étendant en direction périphérique de la pièce d'articulation (7) est réalisé dans la face extérieure de cette pièce d'articulation (7) entre les doubles trous (14), pour l'engagement d'une saillie (17) sur la face intérieure d'une partie de boucle (4a), de la bande de collier (1), qui entoure partiellement cette pièce d'articulation (7) entre les doubles trous (14).

5. Collier de serrage selon la revendication 4, **caractérisé en ce qu'**un second renfoncement (18) est réalisé, par référence à l'axe médian longitudinal de la pièce d'articulation (7) pourvue du taraudage, diamétralement à l'opposé du premier renfoncement (16).

6. Collier de serrage selon la revendication 5, **caractérisé en ce que** les renfoncements (15, 16) sont des entailles ménagées dans la paroi de la pièce d'articulation (7).

7. Collier de serrage selon l'une des revendications 4 à 6, **caractérisé en ce que** la saillie (17) est réalisée par enfoncement de la partie de boucle (4a) sur son côté détourné de la saillie (17).
